# EUROPÄISCHE PATENTSCHRIFT

(11) **EP 1 359 354 B1**
(45) Veröffentlichungstag und Bekanntmachung des Hinweises auf die Patenterteilung: **30.05.2007**
(21) Anmeldenummer: 03009289.4
(22) Anmeldetag: 24.04.2003
(51) Int. Cl.: F16K 27/06, F16K 5/06

(54) **Kugel für einen Kugelhahn**
Ball for a ball valve
Obturateur d'un robinet à tournant sphérique

(30) Priorität: 02.05.2002 DE 10221105
(43) Veröffentlichungstag der Anmeldung: 05.11.2003
(73) Patentinhaber: Klinger AG, 6304 Zug (CH)
(72) Erfinder: Taus, Alfred, 2353 Guntramsdorf (AT); Pscherer, Andreas, 1110 Wien (AT)
(74) Vertreter: Spierenburg, Pieter

(56) Entgegenhaltungen:
- WO-A-02/095274
- DE-B- 1 077 933
- GB-A- 1 220 624
- GB-A- 2 332 501
- US-A- 3 578 289
- US-A- 4 150 810

## Beschreibung

Die Erfindung betrifft eine Kugel für einen Kugelhahn nach dem Oberbegriff des Anspruchs 1.

Kugeln für Kugelhähne werden üblicherweise als Gußstücke hergestellt, die einerseits eine entsprechende aufwendige Bearbeitung benötigen, wobei andererseits wegen der relativ geringen Stückzahlen gewöhnlich große Wartezeiten für die Rohlinge in Kauf zu nehmen sind, so daß die Produktionsflexibilität beeinträchtigt wird.

Für kleine Kugeln ist es außerdem bekannt, Rohrstücke zu einer Kugel umzuformen, in die dann das Leitrohr eingeschweißt wird. Allerdings eignet sich dies nur für kleine Nennweiten, da sonst die erzielten Festigkeiten der Kugeln unzureichend sind.

Aus US 4,150,810 ist eine Kugel für einen Kugelhahn bekannt, die eine Umhüllung aus zwei ausgebauchten, miteinander verschweißten Hälften von beispielsweise 40 mm Dicke und ein mittiges Leitrohr, das mit den Hälften und zusätzlich mit zwei senkrecht zum Leitrohr befindlichen Führungskörpern verschweißt ist, umfaßt. Die Schweißung der Kugelhälften erfolgt in der durch die Achse des Leitrohres und die Rotationsachse aufgespannten Ebene. Der zwischen dem Leitrohr und den Hälften befindliche Freiraum ist mit einem Feststoff oder einem unkomprimierbaren Pulvermaterial befüllbar. Nachteilig an dieser Kugel ist die große Dicke des äußeren Bleches, wodurch keine sauberen und durchgeschweißten Schweißnähte ermöglicht werden. Weiterhin benötigt das Umformen dickerer Bleche starke und teure Maschinen mit hoher Leistung. Die Schweißung der Hälften ist aufwendig.

Aufgabe der Erfindung ist es, eine Kugel für einen Kugelhahn nach dem Oberbegriff des Anspruchs 1 zu schaffen, die auch für große Nennweiten geeignet ist.
Diese Aufgabe wird entsprechend dem kennzeichnenden Teil des Anspruchs 1 gelöst.

Hiernach werden zwei dünnwandige und an den Polen abgeflachte sowie dort mit einer Bohrung zur Aufnahme einer entsprechenden Nabe versehenen Kugelhälften, insbesondere durch Pressen, Drücken oder Tiefziehen hergestellt, verwendet, die entlang des Kugeläquators miteinander mit einem ebenfalls dünnwandigen Leitrohr und senkrecht dazu verlaufenden Naben verschweißt sind, wobei der Zwischenraum zwischen dem Leitrohr und der durch die Kugelhälften gebildeten äußeren Kugelschale mit einer hochfesten Füllmasse ausgegossen ist. So läßt sich in sehr einfacher und preisgünstiger Weise die äußere Kugelform für beliebige Nennweiten des Kugelhahndurchtritts mit der gewünschten Genauigkeit herstellen und diesem durch die Vergußmasse die notwendige Festigkeit verleihen.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt eine Explosionsdarstellung der Metallteile einer Kugel für einen Kugelhahn.
Fig. 2 und 3 zeigen die Kugel für einen Kugelhahn im Längs- und im Querschnitt.

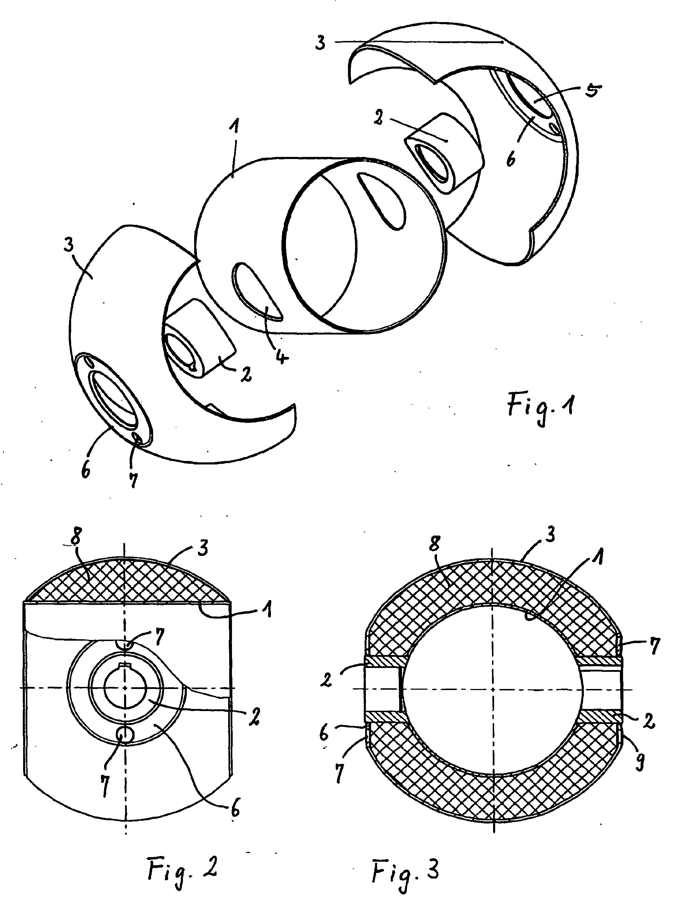

Wie aus Fig. 1 ersichtlich, wird eine Kugel für einen Kugelhahn aus einem Leitrohr 1, zwei Naben 2 und zwei Kugelhälften 3 gebildet. Das Leitrohr 1 ist mittig auf gegenüberliegenden Seiten jeweils mit einer Bohrung 4 versehen, in die jeweils eine Nabe 2 eingesetzt und mit dem Leitrohr 1 verschweißt wird. Die dem Leitrohr 1 zugewandte Seite der Naben 2 ist dementsprechend eine Kreisfläche, die entsprechend einem Zylinderausschnitt geformt ist, so daß die Naben 2 mit der Innenseite des Leitrohrs 1 fluchten.

Die Kugelhälften 3 besitzen jeweils eine Bohrung 5 zur Aufnahme der jeweiligen Nabe 2. Ein ringförmiger Bereich 6 der Kugelhälften, der um die jeweilige Bohrung 5 herum verläuft, ist abgeflacht und ferner mit zwei kleineren Bohrungen 7 versehen. Die Naben 2 sind ebenfalls an der dem Leitrohr 1 abgewandten Seite plan und fluchten daher im wesentlichen mit den Bereichen 6.

Die beiden Kugelhälften 3 werden zweckmäßigerweise mittels Pressen, Drücken oder Tiefziehen hergestellt und sind relativ dünnwandig. Sie sind miteinander, mit dem Leitrohr 1 und mit den Naben 2 insbesondere durch Laserschweißen verschweißt.

Der zwischen dem so gebildeten Kugelaußenkörper und dem Leitrohr 1 befindliche Hohlraum wird anschließend mit einer hochfesten Füllmasse 8 hinterfüllt, um die notwendige Festigkeit der Kugel zu gewährleisten. Hierbei handelt es sich insbesondere um eine schnell und praktisch ohne Schwindung selbstaushärtende Kunstharzbetonmasse.

Vor dem Befüllen werden die Bohrungen 7 auf einer Kugelhälfte 3 direkt durch Verschweißen verschlossen. Eine der restlichen Bohrungen 7 wird zum Befüllen verwendet, die andere dient als Luftaustrittsloch. Nach dem Verfüllen werden die Bohrungen 7 durch Befestigen von kleinen Metallplättchen oder -stopfen 9 verschlossen.

## Patentansprüche

1. Kugel für einen Kugelhahn mit einem mittigen Leitrohr (1) und einer äußeren, mit dem Leitrohr (1) verschweißten Kugelschale, wobei sich zwischen beiden zwei hiermit verschweißte, senkrecht zum Leitrohr (1) verlaufende Naben (2) erstrecken, wobei die Kugelschale aus zwei miteinander verschweißten Kugelhälften (3) besteht und der Zwischenraum zwischen dem Leitrohr (1) und der äußeren Kugelschale mit einer hochfesten Füllmasse (8) ausgegossen ist, **dadurch gekennzeichnet, daß** das Leitrohr (1) und die Kugelhälften (3) aus dünnwandigem Stahl oder Edelstahl bestehen, die Kugelhälften (3) entlang des Kugeläquators miteinander verschweißt und an den Polen abgeflacht sowie dort mit einer Bohrung (5) zur Aufnahme der entsprechenden Nabe (2) versehen sind.

2. Kugel nach Anspruch 1, **dadurch gekennzeichnet, daß** die Kugelhälften (3) benachbart zur jeweiligen Nabe (2) wenigstens eine Einfüllbohrung (7) für Füllmasse (8) und ein Luftaustrittsloch (7) aufweisen, die durch ein Metallplättchen oder -stopfen (9) verschlossen ist.

3. Kugel nach einem der Ansprüche 1 oder 2, **dadurch gekennzeichnet, daß** die Kugelhälften (3) gepreßt, gedrückt oder tiefgezogen sind.

4. Kugel nach einem der Ansprüche 1 bis 3, **dadurch gekennzeichnet, daß** die Kugelhälften (3) durch Laserschweißen verschweißt sind.

5. Kugel nach einem der Ansprüche 1 bis 4, **dadurch gekennzeichnet, daß** die Füllmasse (8) im wesentlichen ohne Schwindung selbstaushärtend ist.

## Claims

1. A ball for a ball valve, comprising a central guide tube (1) and an outer spherical shell welded together with the guide tube (1), with two hubs (2) welded thereto extending between the two and extending perpendicular to the guide tube (1), with the spherical shell consisting of two mutually welded spherical halves (3) and the cavity between the guide tube (1) and the outer spherical shell being poured out with a high-strength filling compound (8), **characterized in that** the guide tube (1) and the spherical halves (3) consist of thin-walled steel or special steel, the spherical halves (3) are welded together along the spherical equator and are flattened at the poles and are provided there with a bore (5) for receiving the respective hub (2).

2. A ball according to claim 1, **characterized in that** the spherical halves (3) comprise adjacent to the respective hub (2) at least one filling bore (7) for the filling compound (8) and an air release hole (7) which is sealed by small metal plates or plugs (9).

3. A ball according to one of the claims 1 or 2, **characterized in that** the spherical halves (3) are pressed, press-formed or deep-drawn.

4. A ball according to one of the claims 1 to 3, **characterized in that** the spherical halves (3) are welded by laser welding.

5. A ball according to one of the claims 1 to 4, **characterized in that** the filling compound (8) is self-hardening substantially without shrinkage.

## Revendications

1. Sphère pour un robinet à boisseau sphérique avec une conduite (1) centrale et une coquille sphérique extérieure, soudée à la conduite (1), dans laquelle deux moyeux (2) soudés à la conduite (1) s'étendent perpendiculairement à celle-ci, dans laquelle la coquille sphérique se compose de deux demi-sphères (3) soudées entre elles et l'espace formé entre la conduite (1) et la coquille sphérique extérieure est comblé avec une masse de remplissage (8) à haute résistance, **caractérisée en ce que** la conduite (1) et les demi-sphères (3) se composent d'acier ou d'acier inoxydable à parois minces, les demi-sphères (3) sont soudées entre elles le long de l'équateur de la sphère et aplaties aux pôles et ceux-ci sont percés d'un trou (5) pour recevoir le moyeu (2) correspondant.

2. Sphère selon la revendication 1, **caractérisée en ce que** les demi-sphères (3) présentent à proximité de leur moyeu (2) au moins un trou de remplissage (7) pour la masse de remplissage (8) et un trou de sortie d'air (7), qui sont bouchés par une plaquette ou un bouchon (9) métallique.

3. Sphère selon l'une des revendications 1 ou 2, **caractérisée en ce que** les demi-sphères sont (3) pressées, repoussées ou embouties.

4. Sphère selon l'une des revendications 1 à 3, **caractérisée en ce que** les demi-sphères (3) sont soudées par soudage laser.

5. Sphère selon l'une des revendications 1 à 4, **caractérisée en ce que** la masse de remplissage (8) est autodurcissable et durcit sensiblement sans retrait.
